# EUROPEAN PATENT APPLICATION

(11) **EP 3 939 417 A1**
(43) Date of publication of application: **19.01.2022**
(21) Application number: 20386045.7
(22) Date of filing: 11.09.2020
(51) Int. Cl.: A01J 5/007, A01K 1/12

(54) **INDIVIDUAL UNIT FOR MILKING AND MILK-METERING THROUGH A SYSTEM OF AUTOMATED MILK DATA COLLECTION DURING THE MILKING OF OVINE AND CAPRINE ANIMALS**

(30) Priority: 12.09.2019 GR 20190100417
(71) Applicant: Legkas, Alexandros, 42100 Trikala (GR)
(72) Inventor: Legkas, Alexandros, 42100 Trikala (GR)
(74) Representative: Christidou, Anna

(57) **Abstract**

The invention applies to stockraising in general, developing the already existing milking devices and introducing stockraising network technology, aiming at the creation of a decentralized installation in order to make the coverage of big stockraising networks possible.

The individual milking unit («BOX») allows the semi-automated milking and digital milk-metering. At the entrance of the animal in the box, the animal pushes the entrance gate and takes position for milking. The animal's eartag is read by the device on the release gate. Flaps open on the upper part of the box and clusters come out so that the milking can begin. After the milking is complete, the clusters return to their original position and the release gate opens so that the animal can exit the box. The milk is weighed and analyzed and the data are sent to a computer or a smartphone. The box is connected with 6, 12 or 24 other box in a line on a metal contruction where the animals enter one way and exit another.

## Description

### Technical field the invention refers to

The invention applies to stockraising in general and, more specifically, the main goal is the development of an innovative milking and digital milk-metering system.

### State of the art of the previous technique - Technical problems to solve

The invention develops the technology of the already existing milking devices introducing stockraising network technology and offering a decentralized milking installation, as the transition to decentralized installation technology is considered necessary in order to make the coverage of big stockraising networks possible.

The previous technique requires specialized installers, who assume the installation of all the equipment, which limits considerably the number of the milking devices that can be installed at the same time, while it lengthens the time required for the provision and installation of the equipment on the spot, and increases its cost at the same time.

The existing technique, is by definition unable to provide the modern, extended networks of thousands of farmers with the necessary technology, causing information asymmetry and low productivity.

One of the main features of stockraising is the ownership of livestock by the farmer, which is the most important motive for their keeping and care of the animals. For this reason, the industry, internationally, is supplied the raw material by the farmers, with annual milk contracts. The milk market has the industry as the principle and the producer as the agent of the order, which is delivered by contract. In this way, the industry creates informal networks of producers that are summed into "Milk Zones".

In contractual economy, an important role is played by information asymmetry, which describes situations where some agents-counterparties hold information which is not available to other counterparties in the same transaction. When observing stockraising in Greece, we can see two asymmetries that play a vital role in the outcome of the contractual relation in the stockraising economy. As the first asymmetry, we consider the transactions for the purchase and sale of livestock between Greek farmers.

So far, we see that the great majority of the farms that do have livestock surplus available cannot exploit it, as there is a maximum animal number (maximum capacity number) for every farm. On the other hand, there are agents who need animals to improve their farms' livestock. So, it is important that the animals be sold to agenets for milk-production, otherwise they will be sold as carcasses (this means we will have waste of livestock)

Today, such transactions fail because the agents do not have information regarding the livestock surpluses, while the access mechanisms are considered inadequate, since 80% of the farms do not have the basic infrastructure for this procedure.

The second asymmetry is found in the milk contracts between the industry and the farmers for the production of Feta cheese with Protected Designation of Origin.

(PDO). The Feta cheese market is not developed enough, since, for decades, industries have been paying a fixed price for the milk of both Greek and foreign animal breeds, because they do not have any information that allows them to distinguish, and the Greek farmers choose foreign breeds that have been genetically enhanced, which they consider more productive.

The procedure of the repeated offer of horizontal price and asymmetric information is called "feedback loop" and it causes the under-developed market, which is a market that is constantly producing non-quality products and low efficiency farmers.

As a result, the Greek breeds are less than 20% of the total number of animals bred for Feta production, since Greek farmers have sheep unsuitable for Feta production, due to the information asymmetry caused by the previous techniques used by the milking devices.

The networks of industry suppliers operate mostly as raw material distribution channels and do not reap any scale or networking benefits. 60% of the Greek farmers are part of one of the loosely structured networks of the 10 biggest industries in the country, their only common thing being the milk contract with the same principle-industry.

### Advantages of the invention

The advantages of the invention are:
- the preconstruction of the individual milking positions in a "BOX" form, which simplifies the process of installing the equipment, allowing, for the first time, the decentralized installation by a non-expert (it is installed by any electrician or the plumber available), as well as the vertical packaging and distribution that enables the simultaneous service of extended farming networks.
- the in-line connection, which allows the milking device to extend, with the addition of more pre-constructed BOX crates.

The pre-construced milking crates (BOX) are packaged vertically and can be distributed through logistics networks at very low cost, making it unnecessary to create support networks, since any part of the system can be replaced on the spot and sent back to the factory.

A considerable advantage deriving from the way the milking unit is designed (BOX) is the possibility of installing milk analysis with lower cost technology than that available on the market, as the space in the BOX allows the use of volumetric rather than flowmetric technology, which is unsuitable for the ovine and caprine animal farming due to the constant flow of the milk during the milking session.

What is more, the installation and maintainance by any electrician and plumber is made possible, abolishing the need for and the cost of creating support, sales and logistics networks and allowing the decentralized installation and maintainance of thousands of machines at the same time.

The possibility of massive installation of low-cost milking devices is a strong motive for the industry and the associations to participate in the improvement of networks and the elimination of information asymmetry, since the installation of the system addresses the longstanding problem of high viable colony in the raw milk.

### Revelation of the invention

The decentralized milking device «BOX» consists of preconstructed milking crates which are serially connected, depending on the livestock needs.

The basic functions incorporated in every individual milking unit will be:
a) the identification of the animal so that all the relevant information is registered on the individual animal's code. This will enable, to a great extent, the assessment of the individual animal in relation with the measured elements,
b) semi-automated milking,
c) measuremet of the volume of the milk,
d) weighing or the animal,
e) analysis of the milk,
f) sending data to a smartphone and
g) the serial connection with other kits.

### Brief Description of the Drawings - Technical characteristics

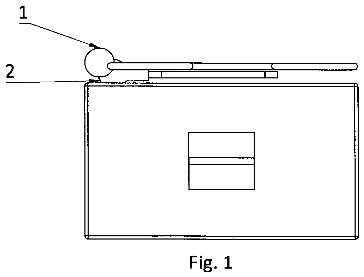

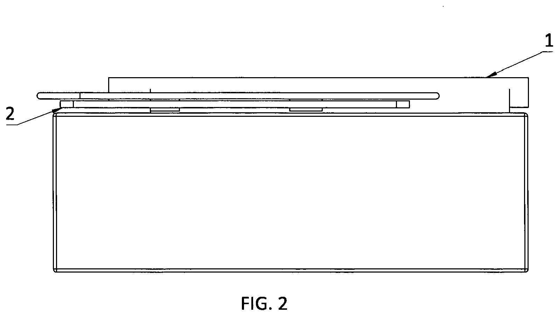

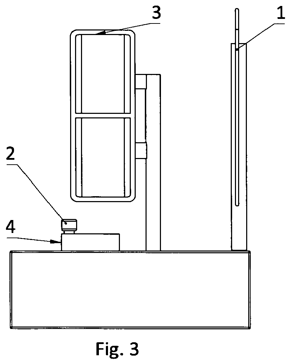

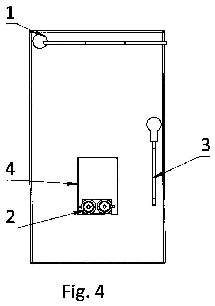

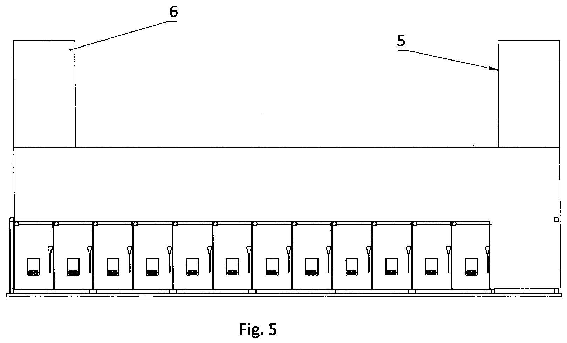

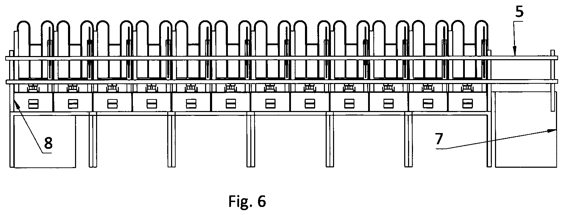

Drawing 1: Individual milking and digital milk-metering unit in its full form for transportation.
   The drawing shows by numbers
   1. Exit gate
   3. Entrance gate
Drawing 2: Individual milking and digital milk-metering unit in its full form for transportation.
   The drawing shows by numbers
   1. Exit gate
   3. Entrance gate
Drawing 3: Individual milking and digital milk-metering unit in its full form for transportation.
   The drawing shows by numbers
   1. Exit gate
   2. Clusters
   3. Entrance gate
   4. Flaps
Drawing 4: Detailed illustration of the system
   The drawing shows by numbers
   1. Exit gate
   2. Clusters
   3. Entrance gate
   4. Flaps
Drawing 5: Illustration of the route followed by the sheep when using the pilot system
   The drawing shows by numbers
   5. Sheep entrance
   6. Sheep exit
Drawing 6: Illustration of the route followed by the sheep when using the pilot system
   The drawing shows by numbers
   5. Sheep entrance
   7. Metal construction
   8. Milking unit

### Method of reproducing the invention

This is a box (8) allowing the semi-automated milking and digital milk metering. Upon entering the box, the animal pushes the entrance gate (3) and takes position for milking. The eartag is identified by the mechanism on the release gate (1). The flaps on the upper part of the box open (4) and the clusters come out (2) so that the milking of the animal can start. At the end of the milking, the clusters (2) and the flaps (4) return to their original place and the release gate opens (1) so that the animal can exit the box. The milk is weighed and analyzed and the data are sent to a computer or a smartphone. The box is serially connected with 6, 12, or 24 other boxes (8) in line on a metal construction (7) where the animals enter from one side (5) and exit from another (6).

## Claims

1. The system is **characterized by** the ability to connect preconstructed individual milking and digital milk-metering units for ovine and caprine animals with a view to creating a decentrilized semi-automated milking installation.
It consists of preconstructed milking crates in a "BOX" form without the need for specialized installation, which can be connected serially to each other with mechanical connectors and packaged vertically (one on top of the other) with a view to their easy transportation, packaging and distribution.

2. The system, according to claim (1) is **characterized by** the fact that the animal is identified upon entering the individual milking and digital milk-metering unit so that all the data can be registered on the code of the individual animal.

3. The system, according to claims (1) and (2) is **characterized by** the fact that the semi-automated milking is conducted through two-pump clusters.

4. The system, according to claims (1), (2) and (3) is **characterized by** the fact that the volume of the milk is measured.

5. The system, according to claims (1), (2), (3) and (4) is **characterized by** the fact that the animal is weighed.

6. The system, according to claims (1), (2), (3), (4) and (5) is **characterized by** the fact that the milk constituents are analyzed .

7. The system, according to claims (1), (2), (3), (4), (5) and (6) is **characterized by** the fact that the registered data are sent to the farmer through a GSM mobile telephony network.

8. The system, according to claims (1), (2), (3), (4), (5), (6) and (7) is **characterized by** the fact that the animal is automatically released through the exit gate after the completion of the milking session.
